# EUROPEAN PATENT APPLICATION

(11) **EP 4 447 282 A1**
(43) Date of publication of application: **16.10.2024**
(21) Application number: 23386110.3
(22) Date of filing: 03.11.2023
(51) Int. Cl.: H02K 3/24, H02K 9/22, H02K 55/00, H02K 3/18

(54) **APPARATUS**

(30) Priority: 12.04.2023 GB 202305348
(71) Applicant: GKN Aerospace Services Limited, Shirley, Solihull B90 8BG (GB)
(72) Inventor: Harrison, Stephen, Solihull, B90 8BG (GB); Climente Alarcon, Vicente, Solihull, B90 8BG (GB); Manolopoulos, Charalampos, Solihull, B90 8BG (GB)
(74) Representative: D Young & Co LLP

(57) **Abstract**

The present invention relates to a thermal energy transfer device for use in transferring thermal energy from a coil of an electrically drivable motor, the device comprising: a plurality of elongate thermally conductive members each arranged to thermally communicate with at least a portion of a coil of an electrically drivable motor; at least one thermally conductive portion arranged to thermally communicate with a plurality of elongate thermally conductive members, wherein each of the plurality of elongate thermally conductive members is electrically insulated from any other of the plurality of thermally conductive members, and wherein the first plurality of elongate thermally conductive members are arranged to have a longitudinal axis in a first axis, and wherein the at least one thermally conductive portion is arranged to have a longitudinal axis in a second axis, wherein the first axis and the second axis are arranged between 45 degrees and 135 degrees apart, and wherein the at least one thermally conductive portion has a thermal conductivity of at least 100 Wm⁻¹K⁻¹ and an electrical conductivity of less than 10⁻¹⁴ Sm⁻¹.

## Description

### Technical Field

The present invention is concerned with electrical propulsion systems and the removal of undesirable heat build up during the operation of such propulsion systems.

Electrical propulsion systems have many benefits over combustion propulsion systems, particularly in relation to chemical emissions and the like. It is widely seen that electrical propulsion systems may render transport as more viable in a long term perspective.

There are however a number of problems inherent in the use of electrical propulsion over traditional combustion propulsion systems. In an attempt to increase the viability of electrical propulsion, attempts have been made to overcome such problems. We provide herein a further advancement in this area.

### Summary of the Invention

Aspects of the invention are set out in the accompanying claims.

Viewed from first aspect there is provided a thermal energy transfer device for use in transferring thermal energy from a coil of an electrically drivable motor, the device comprising: a plurality of elongate thermally conductive members each arranged to thermally communicate with at least a portion of a coil of an electrically drivable motor; at least one thermally conductive portion arranged to thermally communicate with a plurality of elongate thermally conductive members, wherein each of the plurality of elongate thermally conductive members is electrically insulated from any other of the plurality of thermally conductive members, and wherein the first plurality of elongate thermally conductive members are arranged to have a longitudinal axis in a first axis, and wherein the at least one thermally conductive portion is arranged to have a longitudinal axis in a second axis, wherein the first axis and the second axis are arranged between 45 degrees and 135 degrees apart, and wherein the at least one thermally conductive portion has a thermal conductivity of at least 100 Wm⁻¹K⁻¹ and an electrical conductivity of approximately less than 10⁻¹⁴ S/m.

Thus, according to an invention, thermal energy generated in an electrically drivable motor can be efficiently and effectively removed from the system without generation of currents that may give rise to additional undesirable thermal energy and a reduction in efficiency. Removal of thermal energy along two axes has a series of advantages including space efficiency and ease of introduction to additional system elements for further cooling. In particular, by using materials with specific properties for thermal conductivity and electrical resistivity, highly effective thermal energy removal can be provided while significantly reducing the likelihood of undesirable eddy currents or the like.

In effect, a plurality of heat transmission paths are provided by the plurality of elongate thermally conductive members, each being electrically isolated from other transmission paths to decreasing current build up and decreasing eddy currents. Decreasing eddy currents then decreases additional heat generation in such a system and is particularly desirable as the knock-on effects are significant. A greater amount of thermal energy can be effectively transferred while simultaneously a smaller thermally conductive portion can be provided for handling the thermal energy generation from the electrically drivable motor. This provides therefore a very compact, lightweight and therefore highly flight-efficient system. When arranged in an aircraft, for example, this increases the viability of electrical propulsion and therefore increases the likelihood of use over combustion engines. This in turn has a beneficial environmental impact.

In an example, the plurality of elongate thermally conductive members are arranged to abut to at least a portion of a coil of an electrically drivable motor and project away from the at least a portion of a coil.

The elongate thermally conductive members therefore take thermal energy from the coil along a short distance to allow the system to be overall highly compact. Abutting allows excellent thermal transfer.

In an example, each of the plurality of elongate thermally conductive members has a thermal conductivity of at least 1500 Wm⁻¹K⁻¹ and an electrical conductivity of at least 3 × 10⁹ Sm⁻¹ at a temperature of around 30 K.

High thermal conductive and low electrical conductivity is highly desirable for the at least one thermally conductive portion as outlined above. The plurality of elongate thermally conductive members may be individually electrically isolated from one another, for example by taking the form of Litz wires. As such, the plurality of elongate thermally conductive members do not require low electrical conductivity.

In an example, the device further comprises a cryogen source containing a cryogen for use in electrical energy generation, wherein the at least one thermally conductive portion and the plurality of elongate thermally conductive members are in thermal communication with the cryogen.

Cryogen enables improved thermal energy removal. In particular, this is effective as removing thermal energy from the coils of the motor. The thermal communication between the cryogen, the at least one thermally conductive portion and the plurality of elongate thermally conductive members and the motor coils leads to an effective heat sink for receiving thermal energy from the motor coil.

Indeed, in an electrical propulsion system wherein the cryogen may be used in a fuel cell to generate electrical energy, warming the cryogen to a preferably temperature via heat exchanger functions prior to introduction into the fuel cell improves the overall efficiency of the system.

In an example, in use, the at least one thermally conductive portion is maintained at a temperature of below 50 K, and the plurality of elongate thermally conductive members are maintained at a temperature of below around 50 K.

This improves overall thermal energy removal from the motor. In specific examples, the coil of the motor is maintained at or around 40 K or below. The plurality of elongate thermally conductive members may be maintained around about 25 to 40 K. The at least one thermally conductive portion may also be maintained around about 25 to 40 K. The temperature gradient between the coil and a cooling fluid used in the system to provide cooling may be around 25-30 K. The system proposed is highly thermally conductive as such the at least one thermally conductive portion and the plurality of elongate thermally conductive members are likely to be at a similar temperature other than in the event that very large amounts of thermal energy are being transferred.

In an example, at least one of the at least one thermally conductive portion comprises a conduit for carrying a fluid, each conduit arranged to abut at least a portion of at least one of the plurality of elongate thermally conductive members.

Use of conduits allows a fluid to provide additional thermal energy removal from the heat source (the coils of the motor).

In an example, each conduit is in fluid communication with the cryogen in the cryogen source. A cryogenic fluid is particularly effective at providing the additional thermal energy removal.

In an example, in use a fluid cryogen from the cryogen source is arranged to be provided to each conduit and is arranged to flow through each conduit.

The cryogen enables improved thermal heat removal from the motor and/or motor coil. The thermal communication between the cryogen, conduits, and plurality of thermally conductive members and the motor coils leads to an effective heat sink for receiving thermal energy from the motor coil.

In an example, the at least one thermally conductive portion is formed from at least one of: single crystal sapphire; polycrystalline sapphire; amorphous sapphire; diamond; aluminium nitride; and, beryllium oxide. Such materials are highly effective for use in such systems as having high thermal conductivity and low electrical conductivity. Other materials that are suitable for use in the at least one thermally conductive portion include quartz, titanium dioxide, manganese fluoride, and magnesium oxide. In examples, the at least one thermally conductive portion may be formed of ceramics. While manufacturing such arrangements can be intensive, the inventors have found that there are benefits associated with doing so.

In an example, the at least one thermally conductive portion is in the form of a block or a plurality of strands. Each arrangement has a longitudinal axis along which thermal energy can be transferred effectively to a heat sink. The heat sink may take any form.

In an example, the plurality of elongate thermally conductive members are formed from the same material as a coil of an electrically drivable motor.

In this way, the members and the coil will have the same (or very similar) thermal expansion and contraction, such that the contact between the members and the coil will not vary significantly. This ensures a good connection and good thermal energy removal throughout use. This arrangement may prevent or reduce differences in thermal expansion between elements that are preferably operated in a close and precise physical arrangement. Differences in expansion are therefore undesirable.

In an example, the first axis and the second axis are arranged between 70 degrees and 110 degrees apart. In an example, the first axis and the second axis are substantially orthogonal.

Each of these provide increasing advantages in regards to space and material use efficiency. In an example, the first axis is a longitudinal axis and the second axis is a transverse axis.

In an example, the at least one thermally conductive portion is electrically non-conductive.

In this way eddy currents can be strongly mitigated. The inventors have developed various systems that satisfy this requirement without increasing the drawbacks that are readily associated with such materials.

Viewed from another aspect there is provided a propulsion system for an aircraft comprising: a cryogen source containing a cryogen for use in electrical energy generation; at least one fuel cell for generating electrical energy at least in part from the cryogen; a motor for providing propulsion at least in part from the electrical energy, the motor comprising at least one coil; a thermal energy transfer device for transferring thermal energy from the at least one coil, the thermal transfer device comprising: a plurality of elongate thermally conductive members each arranged to thermally communicate with at least a portion of the coil; at least one thermally conductive portion arranged to thermally communicate with a plurality of elongate thermally conductive members, wherein each of the plurality of elongate thermally conductive members is electrically insulated from any other of the plurality of thermally conductive members, and wherein the first plurality of elongate thermally conductive members are arranged to have a longitudinal axis in a first axis, and wherein the at least one thermally conductive portion is arranged to have a longitudinal axis in a second axis, wherein the first axis and the second axis are arranged between 45 degrees and 135 degrees apart, and wherein the at least one thermally conductive portion has a thermal conductivity of at least 100 Wm⁻¹K⁻¹ and an electrical conductivity of approximately less than 10⁻¹⁴ Sm⁻¹.

Viewed from another aspect there is provided a method of transferring thermal energy from a coil of an electrically drivable motor, the device comprising: operating an electrically drivable motor, conducting thermal energy from a coil of the electrically drivable motor along a first plurality of elongate thermally conductive members having a longitudinal axis in a first axis, conducting thermal energy from a coil of the electrically drivable motor along at least one thermally conductive portion having a longitudinal axis in a second axis, wherein the first axis and the second axis are arranged between 45 degrees and 135 degrees apart, and wherein the at least one thermally conductive portion has a thermal conductivity of at least 100 Wm⁻¹K⁻¹ and an electrical conductivity of approximately less than 10⁻¹⁴ Sm⁻¹.

Viewed from yet another aspect there is provided an aircraft comprising the above thermal energy transfer device or the above propulsion system.

Viewed from yet another aspect there is provided a method of operating a thermal energy transfer device according to aspects described above or a propulsion system according to aspects described above.

The cryogen source may be a source of liquid helium or liquid hydrogen. Such a cryogen is highly effective for thermal energy removal and boiled hydrogen may be used in fuel cells, or in combustion, or the like for providing energy for the motor. The cryogen may be hydrogen, helium, nitrogen or the like, in liquid, gas, supercritical or solid phase. In an example, the cryogen may be frozen nitrogen or cryogenically frozen water.

The plurality of thermally conductive members may be in the form of a plurality of adjacent strands of wire, individually insulated optionally wound around each other. Such wire arrangements are often referred to as litz wires. Such wires are an example of elongate and narrow conductive members. Litz wires are relatively simple to produce and integrate into the system well from a manufacturing view. In an example, the plurality of thermally conductive members are formed from high purity aluminium.

It has been found that high purity aluminium enables highly effective conducting of thermal energy. In a particular example, the purity may be around 99.99% or higher than around 99.95%.

The cryogen source may be a cryogen distributor comprising a corresponding number of outlets in fluid communication with the plurality of conduits. This arrangement allows for effective cryogen distribution through the arrangement and is easy to construct from a mechanical position.

The cryogen source may be a user-controllable cryogen source arranged to controllably provide cryogen to the plurality of conduits.

This allows control for the user of active cooling from the cryogen for use in moments of high demand, such as take off or the like. Active cooling is an additional manufacturing difficulty to introduce, however it has been shown herein to be beneficial for thermal energy removal and in electrically driven aircraft propulsion, as cryogen may already be present. In essence, this arrangement takes advantage of aspects that may already be present in aircraft and therefore provides improved thermal energy removal performance without significantly increasing the additional manufacturing or structural difficulties.

The plurality of thermally conductive members may be arranged into a cable, in particular a spiral or helical winding. The thermally conductive members may be interleaved. Such arrangements may be particularly space efficient, easy to manufacture and robust.

In an example, the cryogen source and the plurality of conduits are arranged in a closed loop. In this way, the cryogen is returned to the source after use and cryogen is not required to be provided as regularly as would be the case where the system is not closed-loop.

### Brief Description of the Drawings

One or more embodiments of the invention will now be described, by way of example only, and with reference to the following figures in which:
Figure 1 shows a schematic of a current state of the art thermal energy transfer device for use in an electrically drivable motor;
Figure 2a shows a schematic of a thermal energy transfer device developed by the inventors;
Figure 2b shows a schematic of a thermal energy transfer device developed by the inventors;
Figure 2c shows a schematic of a thermal energy transfer device developed by the inventors;
Figure 3a shows a schematic of a thermal energy transfer device according to an example of the present invention;
Figure 3b shows a schematic of a thermal energy transfer device according to an example of the present invention;
Figure 4 shows a schematic of a thermal energy transfer device according to an example of the present invention;
Figure 5 shows a schematic of a thermal energy transfer device according to an example of the present invention;
Figure 6 shows a schematic of a thermal energy transfer device according to an example of the present invention;
Figure 7 shows a schematic of a thermal energy transfer device according to an example of the present invention;
Figure 8 shows a schematic of a portion of a thermal energy transfer device according to an example of the present invention;
Figures 9a and 9b show schematics of portions of a thermal energy transfer device according to an example of the present invention;
Figures 10a-10f show schematics of portions of a thermal energy transfer device according to an example of the present invention;
Figure 10g shows a graph of coil length against maximum current densities for each of the arrangements according to Figures 10a-10f;
Figure 11 shows a graph of temperature against thermal conductivity for a range of materials suitable for use in the present invention;
Figure 12 shows a schematic of a thermal energy transfer device according to an example of the present invention; and,
Figure 13 shows a schematic of a portion of a thermal energy transfer device according to an example of the present invention.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to". The invention is further described with reference to the following examples. It will be appreciated that the invention as claimed is not intended to be limited in any way by these examples. It will also be recognised that the invention covers not only individual embodiments but also combination of the embodiments described herein.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the spirit and scope of the claimed invention. Various embodiments of the invention may suitably comprise, consist of, or consist essentially of, appropriate combinations of the disclosed elements, components, features, parts, steps, means, etc, other than those specifically described herein. In addition, this disclosure may include other inventions not presently claimed, but which may be claimed in future.

### Detailed Description

An invention described herein relates to thermal energy conduction for use with an electrically drivable motor. A particular system for this invention may be an aircraft with a low temperature electrically drivable motor, or an electrically drivable motor utilising energy generated in low temperature environments.

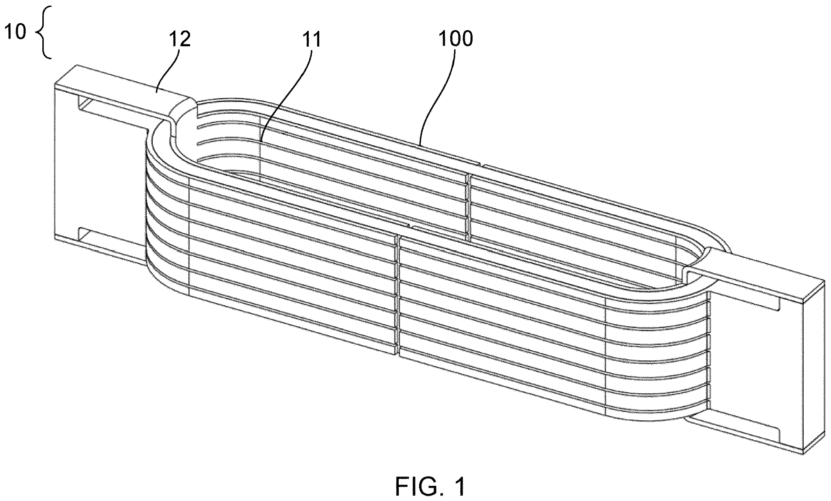

Figure 1 shows a simple schematic of a current state of the art thermal energy transfer device 10. The current state of the art thermal energy transfer device 10 has a slotted plate 11 and a heat sink 12. The device 10 is arranged around a motor coil winding 100. The motor coil winding 100 may be operated with alternating current (AC). Such an arrangement is often used in state of the art systems.

The inventors of the system disclosed herein have recognised that eddy current suppression by the present system can be improved and that this has a significant impact on the efficiency of the overall system.

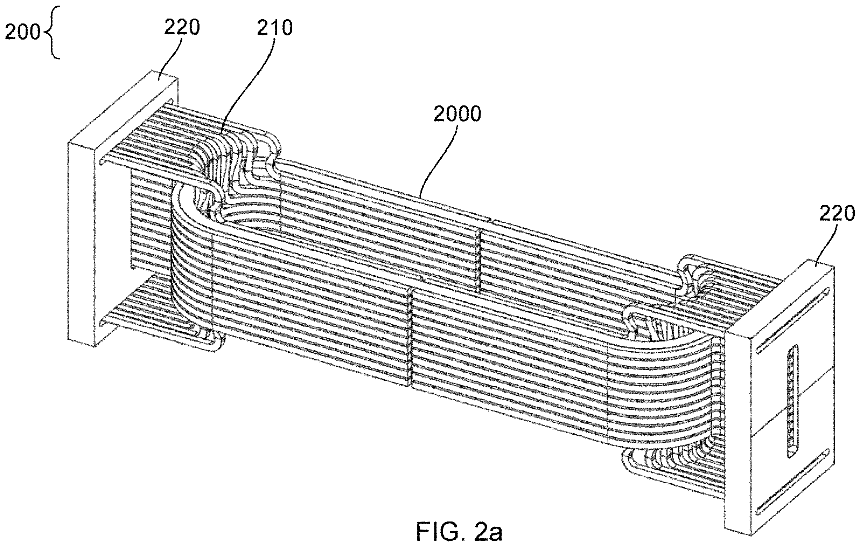

Figure 2a shows a simple schematic of a thermal energy transfer device 200. The device 200, shown in the example of Figure 2a, has a plurality of thermally conductive members 210 arranged to thermally communicate with at least one coil 2000 of an electrically drivable motor. The device 200 has a thermally conductive portion 220. The thermally conductive portion 220 is connected to the plurality of thermally conductive members 210. The plurality of thermally conductive members 210 are directly electrically insulated from any other of the plurality of thermally conductive members 210.

"Directly" here relates to electrical insulation between adjacent conductive members 210. The thermally conductive members 210 are connected to the thermally conductive portion 220. Therefore, a current may pass through a specific thermally conductive member through the thermally conductive portion 220 and into another thermally conductive member also connected to the thermally conductive portion 220. However, current may not pass from any one thermally conductive member 210 directly (not via a third component) to any other, or in an example any other adjacent, thermally conductive member 210.

The device disclosed herein may advantageously be used with any electrically drivable motor. In particular, the device may be used with a low temperature arrangement such as a superconducting motor arrangement or a motor with superconducting elements contained within it. Additionally, or alternatively, the device may be used with a low temperature arrangement such as a hyperconducting motor arrangement or a motor with hyperconducting elements contained within it. Each of these motor arrangements may be operated using alternating current.

The thermally conductive portion 220 may be a heat sink or the like for removing thermal energy from the thermally conductive members 210. The device 200 may have one or more thermally conductive portions 220. In the example of Figure 2a, the device 200 has two thermally conductive portions 220 arranged at either end of the motor coil 2000. The plurality of thermally conductive members 210 may connected to both thermally conductive portions 220. The thermally conductive portion 220 may be a cold block or a large thermally conductive block that is connected to a cooling arrangement to remove thermal energy from the device 200. The thermally conductive portion 220 may have a thermal mass of around 10 times or more of the thermal mass of a thermally conductive member 210. This allows the thermally conductive portion 220 to effectively disperse thermal energy received from the thermally conductive members 210. The thermally conductive members 210 are arranged to effectively transport thermal energy while the thermally conductive portion 220 is arranged to store and disperse the thermal energy.

In an example, the plurality of thermally conductive members 210 are formed from the same material as the coil 2000 of the electrically drivable motor. In this way, when temperature changes occur, the physical connection between the elements is not warped due to thermal expansion/contraction. In particular, when conducting thermal energy away from the coil 2000, there is no physical disconnect that occurs between the elements. This ensures a more robust arrangement in use.

In an example, the plurality of thermally conductive members are elongate and have a diameter of around 0.1 mm. The diameter of a thermally conductive member may be around 1 mm, 0.9 mm, 0.8 mm, 0.7 mm, 0.6 mm, 0.5 mm, 0.4 mm, 0.3 mm, 0.2 mm, 0.1 mm or 0.05 mm. It has been found that 0.1 mm provides a balance between reducing the generation of undesirable eddy currents in the device 200 and ease of manufacturing. In a specific example, the plurality of thermally conductive members may be litz wires.

While industry-standard aluminium typically has a purity of around 99.5%, the present invention preferably uses higher purity aluminium. In an example, the plurality of thermally conductive members are formed from high purity aluminium. High purity aluminium may be aluminium with around a 99.7% purity or above, such as 99.8% purity. High purity aluminium may be aluminium with around 99.9% purity. High purity aluminium may be aluminium with around 99.99% purity. Such material typically has a residual resistivity ratio (the ratio between resistance at 273 and 4 K) of around 500. This has been found to be advantageous for use in this device.

The motor coil may be formed of other materials with similar properties such as niobium-titanium, high temperature superconductor, or magnesium diboride. Such options offer utilising superconducting properties wherein electrical resistance of effectively zero can provide extremely high electrical efficiencies. Such materials however have relatively low thermal conductivity. As such, these materials may be advantageously used in cryogenic alternating current motors for the motor coils. Such materials do not have preferential thermal energy conductivity for use in the plurality of thermally conductive members.

Figure 2a illustrates a schematic example of a device devised by an inventor. Element 210 may represent a plurality of thermally conductive members. The thermally conductive members may be bundled into a wire, for example a cable of wires. This may be referred to as a Litz cable. A Litz cable is a bundle of insulated strands. In an example, element 210 of Figure 2a represents a Litz cable comprising a large number of individually electrically insulated wires. Each of these wires may be a thermally conductive member. The Litz cable may comprise between around 50 to 5000 strands each of around 0.1 mm diameter. The number of strands may preferably be around 750 to 1250 strands, as this has been found to be particularly effective. The strands need not be circular in cross section, the use of "diameter" here is illustrative for measurements. The Litz cables may or may not be individually insulated from other Litz cables. In the example shown in Figure 2a, the Litz cable has been formed into a square cable. A Litz wire consists of multiple thin strands of wire, individually insulated from each other and bundled together. Such an arrangement advantageously hinders the production of eddy currents, when electrically conductive materials are within a moving magnetic field.

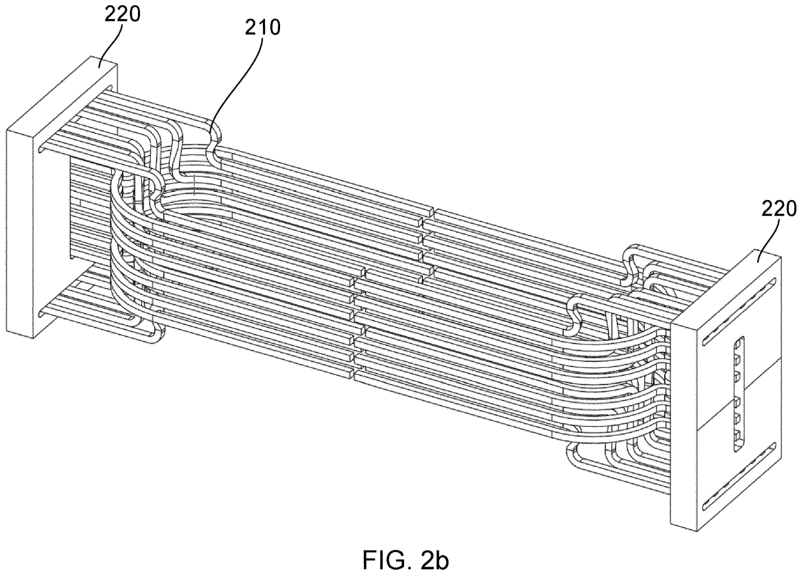

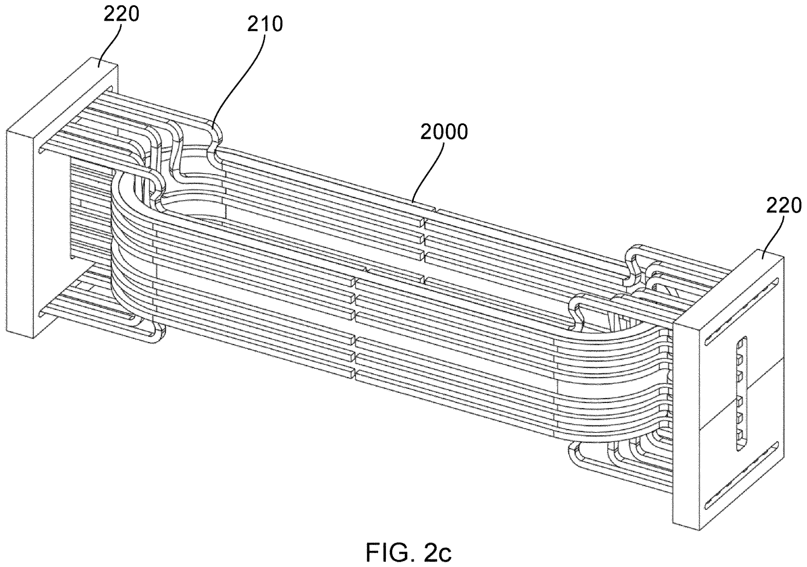

Referring now to Figures 2b and 2c, there are similar views to that shown in Figure 2a. Similar features have similar reference numerals, for example Figures 2b and 2c show thermally conductive members 210 connecting to a thermally conductive portion 220. While the arrangement of Figure 2a shows the motor coil 2000, this is omitted in the arrangement of Figure 2b.

In particular, Figure 2b clearly illustrates an arrangement of the thermally conductive members 210. The motor coil has been omitted from the view shown in Figure 2b to improve visibility of the thermally conductive members 210. Slightly fewer thermally conductive members 210 have been included in the view of Figure 2b, again for improved visibility. In practice, the arrangement has better thermal conductivity with a greater number of thermally conductive members 210.

Referring now to Figure 2c, a similar view to Figures 2a and 2b is shown. The view of Figure 2c has a similarly "spaced" arrangement for the thermally conductive members 210, but also includes a motor coil 2000. Some thermally conductive members 210 can be seen to have a curve in their form prior to contacting the thermally conductive portion 220. This curved portion may be advantageous in accounting for thermal expansion in the arrangement during use. In particular, this formation allows for expansion and contraction during transferal of thermal energy without introducing high levels of mechanical stress into the arrangement.

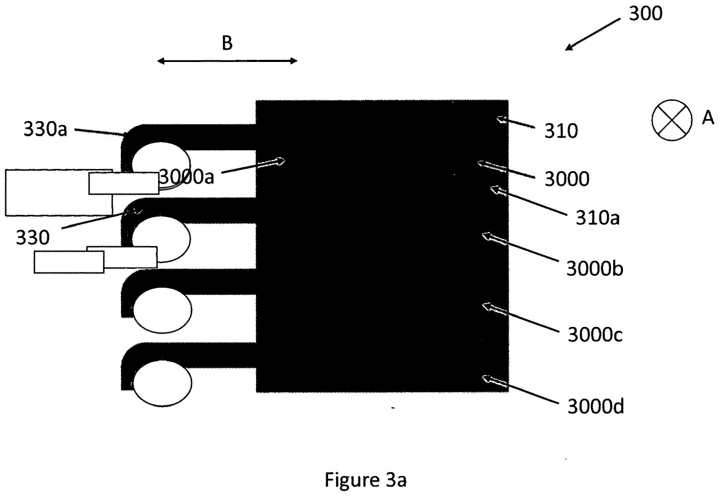

Referring now to Figure 3a, there is shown an example of a thermal energy transfer device 300 with a coil 3000 of an electrically drivable motor according to an example of the present invention. The thermal energy transfer device 300 has a first plurality of thermally conductive members 310 arranged to thermally communicate with at least one layer of the coil 3000 of an electrically drivable motor. The thermal energy transfer device 300 has a second plurality of thermally conductive members 330 arranged to thermally communicate with at least one layer of the coil 3000 of an electrically drivable motor. The term "coil" is used herein to refer to the motor coil or coils of a motor. A motor coil is a winding with at least one or more turns (as would be understood in the art). The term "layer" is used herein to refer to distinct layers of the coil 3000, wherein a layer is spaced apart from the other layers - in the example of Figure 3a, layers 3000a, 3000b, 3000c, 3000d are all spaced apart. Each layer comprises at least one turn of the coil 3000 winding. Each layer may comprise two or more turns of the coil 3000. Each of the layers of the coil may be referred to as a portion of the coil. The coil is a portion of an electric motor that can generate large thermal energy and therefore the present device is arranged to remove the thermal energy from that portion of the motor. As such, it is understood what is meant by the term "coil".

Each of the first 310 and second 330 plurality of elongate thermally conductive members are directly electrically insulated from any other of the plurality of thermally conductive members. This may be via a form of electrical insulating cover or coating or the like. The thermally conductive members may be litz wires or the like wherein the thermally conductive portion has a wire that conducts thermal energy surrounded by insulation.

The first plurality of elongate thermally conductive members 310 are arranged to have a longitudinal axis in a first axis. The second plurality of elongate thermally conductive members 330 are arranged to have a longitudinal axis in a second axis. In an example, the first axis and the second axis are not aligned, i.e. are not parallel. The first axis and the second axis are misaligned. In an example, this misalignment is in the region of from around 30° to around 150°. Advantageously, the axes are arranged so that there is an angle of between 45° to 135° between the two axes. This arrangement has been found to be particularly advantageous by improving the effectiveness of removal of thermal energy and the amount of material used to provide the device 300.

In an example, the first axis and the second axis are between 70° to 110° out of alignment. In an example, the first axis and the second axis are between 80° to 100° out of alignment. In an example, the first axis and the second axis are broadly orthogonal.

In an orthogonal (or broadly orthogonal) arrangement, the first and second axes are 90° out of alignment. The members 330 are therefore particularly effective at removing heat along a different direction to member 310. In this way, the user can connect the members to other nearby thermal energy transfer components in particularly short distances, which is advantageous for rapid thermal energy removal and for reduced material usage in this device (the shorter the distance over which thermal energy needs to be transmitted by the members, the less material needed for use in the members). This advantage is provided, though in a decreasing manner, for angles of misalignment between the axes that stray from a perpendicular arrangement. There is therefore a decrease in efficiency as the axes move from an orthogonal arrangement, but other angles still provide some of the advantages of this present arrangement. As such, disclosed herein is a system with an arrangement that can be varied and provide a similar advantageous output.

The example shown in Figure 3a has what may be referred to as an alternating arrangement. In the arrangement of Figure 3a, the order of the elements is that the motor coil 3000 abuts, on one side, one of the first plurality of elongate thermally conductive members 310a and, on another side, abuts one of the second plurality of elongate thermally conductive members 330a. There is no requirement for this arrangement within the device 300. The motor coil 3000 may abut different components of the thermal energy transfer device 300 in different arrangements. The arrangement of the present disclosure, in general, is such that there is high efficiency thermal energy removal from the motor coil 3000 by the combination of the two sets of elongate thermally conductive members 310, 330. Different arrangements are envisaged and some are discussed in more detail later.

In the example shown in Figure 3a, the first axis may be viewed as projecting into the page, while the second axis may be viewed as projecting from left to right of the page. For example, the axis shown by reference A (with crossed circle symbol indicating into and out of the page) may be the first axis, and the axis shown by double ended arrow B may be the second axis.

In an example, the first plurality of elongate thermally conductive members 310 of Figure 3a are in the same position and formed from the same material as the plurality of elongate thermally conductive members 210 in Figures 2a-2c.

As can be seen Figures 2a-2c, the first plurality of elongate thermally conductive members 210 have a long axis along the length of the motor coil 2000. An axis broadly orthogonal to this would be away from the length of the motor coil 2000. In this sense, the first plurality of elongate thermally conductive members may be described as being arranged along a longitudinal axis, while the second plurality of elongate thermally conductive members may be described as being arranged along a transverse axis. In language herein, the first plurality of elongate thermally conductive members may be described as longitudinal thermally conductive members and the second plurality of elongate thermally conductive members may be described as transverse thermally conductive members.

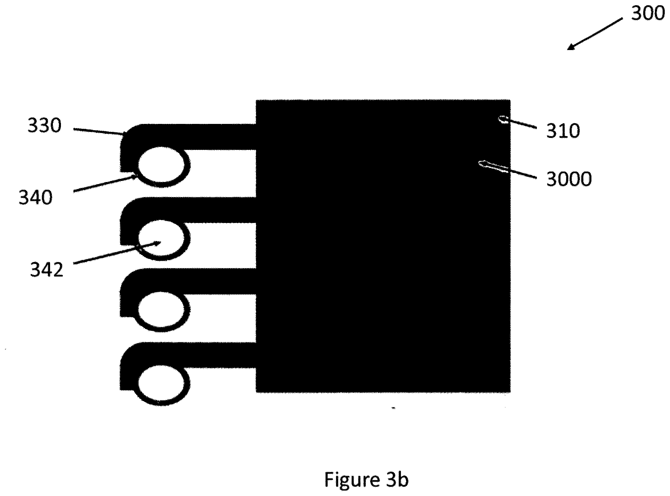

Figures 2a-2c show the first plurality of elongate thermally conductive members 210 as longitudinal thermally conductive members with a long axis parallel to the long axis of a portion of the motor coil 2000. The longitudinal thermally conductive members need not be so arranged. "Longitudinal" is used to describe members 210, 310 as compared to the members 330 of Figures 3a and 3b. The two sets of members 210, 310, 330 are arranged in different directions and therefore "longitudinal" and "transverse" may be used to differentiate one set of elongate thermally conductive members from the other. As noted above, these do not need to be arranged orthogonally with respect to one another although significant benefits are provided in such a relative arrangement.

The longitudinal members need not be parallel to a portion of the motor coil to provide the benefits disclosed herein. The transverse members need not be perpendicular to said portion of the motor coil to provide the benefits disclosed herein. Rather, the benefits can be provided by enabling heat transfer in different directions along highly conductive pathways that allow for excellent thermal energy removal. Arrangements disclosed herein utilise this to improve engine efficiencies and are shown as examples but are not limiting in the specific arrangements within those examples.

The provision of elongate members with high thermal conductivity along a length of the members arranged in different axes, provides a rapid removal of thermal energy from the motor coils to an external environment. This rapid thermal removal is able to remove the thermal energy in a directionalised manner (in more than one direction) to advantageous positions, such as the location of a cold sink or the like. The arrangement herein is extremely efficient at removal of thermal energy from high thermal energy motor coils.

The plurality of elongate thermally conductive members may be referred to herein as heat shunts. The heat shunts may be formed from Litz wires to avoid AC losses and the production of eddy currents in turn lead to additional heating.

Referring now to Figure 3b, there is shown an example of a thermal energy transfer device 300 according to an example. The arrangement of Figure 3b differs from the arrangement of Figure 3a by the presence of a plurality of conduits 340 for carrying a fluid. Each of the plurality of conduits 340 may be arranged to abut a portion of a corresponding one of each of the second plurality of elongate thermally conductive members 330.

The plurality of conduits 340 may be arranged to abut any of the first plurality of elongate thermally conductive members 310 and the second plurality of elongate thermally conductive members 330. The plurality of conduits 340 are arranged to be thermally conductive and therefore transport heat from any of the elongate thermally conductive members. In this way, the arrangement 300 is more effective at removing thermal energy from the motor coils 3000 in use.

In an example, the conduits 340 have a flow path 342 within the conduit 340. The flow path allows a fluid to be provided along the conduits 340 and provide further thermal energy removal. The conduits 340 may be considered as capillaries, tubes or passages or the like suitable for transporting a fluid from a source of fluid, to at least some of the elongate thermally conductive members for removing thermal energy from the elongate thermally conductive members.

The conduits 340 assist in greater thermal energy removal. The conduits 340 may assist in preventing thermal runaway which can endanger stable operation of the motor. There may be an equivalent number of conduits 340 as the number in the second plurality of elongate thermally conductive members 330. In another example, there may be a different number of conduits 340 to the number of in the second plurality of elongate thermally conductive members 330. There is no requirement for a one-to-one relation between the conduits 340 and the members to which the conduits abut. In an arrangement, there may be a conduit abutting each of the first 310 and second 330 plurality of elongate thermally conductive members.

In an example, the conduits 340 may be formed of a thermally conductive material to provide additional thermal conduction from the high thermal energy area near the motor coil 3000. The conduits 340 may have a relatively thin wall. This will allow efficient thermal transfer through the wall of the conduit 340. In an example, the conduit 340 may be formed from a relatively poor electrical conductor to reduce the creation of eddy currents, such as stainless steel (which has suitable properties for a metal).

The conduits 340 may be arranged to abut the shunts (thermally conductive members). The conduits 340 may be connected to the thermally conductive members. The conduits 340 may be bonded to the thermally conductive members. The conduits 340 may be any of soldered, brazed and/or welded to the thermally conductive members or the like.

The conduits 340 shown in Figure 3b have a circular cross-section for the flow path 342. The conduits 340 may be any cross section such as square, circular or polygonal. There is no requirement for the conduits 340 to have any particular cross section. The conduit 340 may have a flexibility that can account for stresses that may be caused due to changes in temperature that may be associated with a thermal energy removal device that provides a low temperature fluid to perform thermal exchange functions. Alternatively, the conduit 340 may have a flexible connection at at least one end to account for movement or stresses or the like.

The conduits 340 provide a flow path from a cryogen source or other cold fluid source to the high thermal energy shunts 310, 330 and motor coil 3000. In a preferred arrangement, the thermally conductive path between the fluid store and the coil is as short as possible. In this way, the geometry of longitudinal 310 and transverse 330 shunts with additional cooling provided by conduits 340 provides a highly effective thermal energy transfer device 300.

The conduits 340, when transferring cryogen, are preferably providing highly effective thermal transfer through the wall or walls of the conduit 340 to the cryogen flowing in the conduit 340. In this example, the heat transfer by the material of the conduit 340 itself is significantly less than the heat transfer performed by the cryogen. As such, it is particularly advantageous for conduits 340 to have thin walls.

In an example, the arrangement further comprises a cryogen source for providing a cryogen. The conduits may be in fluid communication with the cryogen source. In this way, the arrangement can provide particularly effective thermal cooling via use of cryogens in fluid form. In an example, the cryogen source may be or may contain a cryogen distributor.

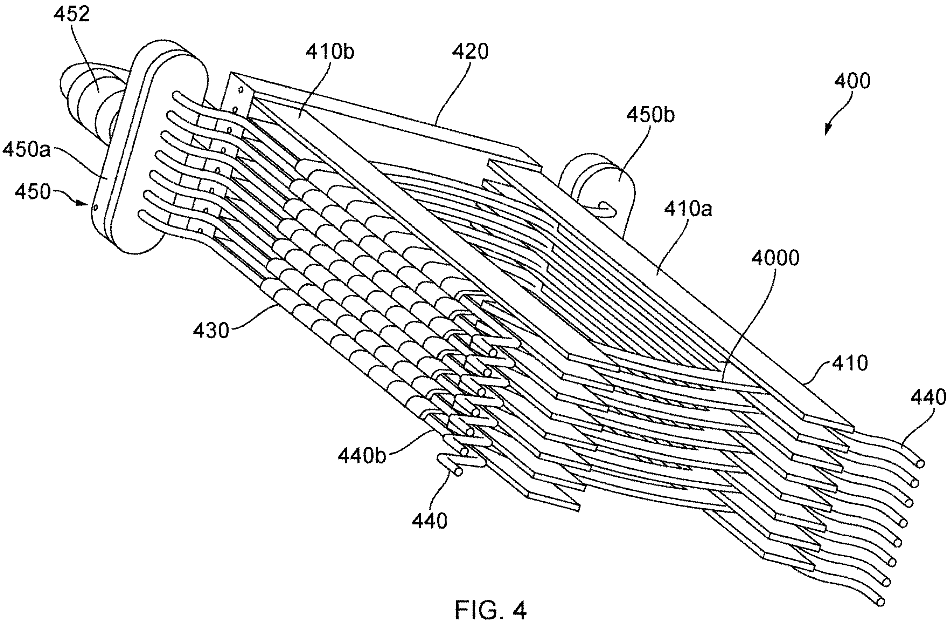

Referring now to Figure 4, there is shown an example of a thermal energy transfer device 400. The thermal energy transfer device 400 is shown alongside a motor coil 4000. The motor coil 4000 is shown in seven portions (or layers), which may be formed from one or more turns of the coil 4000. The coil has seven portions in the example of Figure 4, however the coil 4000 may be formed of a greater number, or a lesser number, of portions (or turns) in other examples. The thermal energy transfer device 400 has similar components as the arrangement of Figure 3b. The example of Figure 4 has a first plurality of elongate thermally conductive members 410 (the longitudinal heat shunts), a second plurality of elongate thermally conductive members 430 (the transverse heat shunts), and the conduits 440. The conduits 440 are shown as abutting the transverse heat shunts 430.

In the example of Figure 4, there are two sets of longitudinal heat shunts 41 0a, 410b, and two sets of conduits 440a, 440b. There are also two sets of transverse heat shunts 430 though only one set 430 can be seen due to the angle of the image (the other set in the example is present on the not-shown side of component 410a). In an example, the number of individual transverse heat shunts 430 may be substantially the same as the number of individual longitudinal heat shunts 410. In an example, the number of individual transverse heat shunts 430 may be greater than the number of individual longitudinal heat shunts 410. In an example, the number of individual transverse heat shunts 430 may be fewer than the number of individual longitudinal heat shunts 410. In an example, for each longitudinal heat shunt 410 there is N times as many transverse heat shunts 430 (where N is a positive integer). In the example of Figure 4, there are 11 transverse heat shunts 430 for every one longitudinal heat shunt 410. The arrangement allows rapid thermal energy removal from the coil 4000 by both the longitudinal heat shunts 410 and by the transverse heat shunts 430 to the conduits 440.

The number of conduits 440 need not be related to the number of longitudinal heat shunts 410 or the number of transverse heat shunts 430. In the example of Figure 4 there are seven conduits in the first set of conduits 440a and seven conduits in the second set of conduits 440b. The number of conduits in the sets of conduits present in the arrangement need not be equivalent. A corresponding number being present in both sets may allow the construction and arrangement of the device 400 to be simpler (e.g. the distributors 450, discussed below, may be formed in the same way or from the same mold or design or the like). In the main, the number of members (transverse or longitudinal) or conduits do not need to be related to one another. Arrangements can be envisaged that provide the benefits disclosed herein without a specific relationship between the number of shunts and the number of conduits.

In an example, the motor coil has seven portions (or layers) - as shown in Figure 4. This may be referred to as M portions in the motor coil, wherein each portion may comprise one turn, two turns or more turns. The number of turns need not be equal in each portion though may be for simplicity of construction. In the example of Figure 4, there are M=7 portions, wherein there is one turn per portion. In an alternative arrangement according to the example of Figure 4, there may be two turns per portion, such that the motor coil has 14 turns.

There may be M+1 longitudinal heat shunts arranged in thermal connection with the motor coil (as per the eight longitudinal heat shunts on a first side 410a and on a second side 410b of the coil 4000). As noted above, the number of longitudinal heat shunts 410 need not be the same on each side of the motor coil 4000 as per the example of Figure 4, though it may be organisationally more straightforward to construct and produce a device with that symmetry of arrangement. The number of transverse heat shunts 430 is unrelated to the motor coil portions. There may be a larger amount of transverse heat shunts 430 than longitudinal heat shunts 410 as shown in the example of Figure 4. In the example of Figure 4 there are 77 transverse heat shunts 430 shown (with a similar number on the not shown side of the motor coil 4000). There are 11 transverse heat shunts 430 per motor coil portion (seven).

The motor coil may have any number of portions and any number of turns. The above is merely illustrative and Figure 4 is an example of an arrangement.

In an example, the motor coil may have a number of turns. In an example, this may be in the region of up to around 10 or up to around 15. The motor may comprise a number of coils. The examples herein consider one coil with a number of coil portions for simplicity. The arrangement disclosed herein is applicable to an arrangement with a plurality of coils.

In an example, the motor may have between around 6 to around 24 coils. Alternatively, the motor may have any suitable number of coils chosen to provide a multiphase coil arrangement. In an example, the motor in a three-phase electrical arrangement may have 24 coils. In another example, the motor in a four-phase electrical arrangement may have 32 coils. The number of coils for the motor may be any suitable number chosen to achieve the desired multiphase motor arrangement. In this way, the motor is formed of a series of coils with portions (or layers). Heat shunts may be inserted between the portions of the coils. In this way, the heat shunts may be in direct contact with coil portions and therefore conduct thermal energy from the coil.

The heat shunts may be in direct contact but do not need to be in direct contact with the coil. Provided thermal energy can be conducted away from the coil by the shunts, the shunts are described herein as being in thermal communication with the coil. An interleaved arrangement may provide both direct contact and thermal communication. A different arrangement may not provide direct contact but allow effective thermal communication, such that the heat shunt is able to remove thermal energy from the motor coil as intended. This is the intended understanding of the term "thermal communication".

In the example of Figure 4, the arrangement 400 also has a cryogen distributor 450. The cryogen distributor 450 may also be referred to herein as a cryogen manifold. The distributor 450 may link one or a few flow paths of cryogen to a multitude of flow paths of cryogen. This may be in the form of acting as chamber that links a single inlet to a plurality of outlets. The cryogen distributor 450 may be a part of a cryogen source in which cryogen can be stored and later provided to the conduits 440 for cooling (directly or indirectly) the shunts 410, 430 and the motor coil 4000. In use, a fluid cryogen from the cryogen source is arranged to be provided to the plurality of conduits and is arranged to flow through the conduits. The distributor 450 may operate to separate the flow from the singular flow from the cryogen source into the several flow paths for the plurality of conduits. The shunts 410, 430 remove thermal energy from the motor coils 4000. The conduits 440 may abut one or more shunts 410, 430 and the thermal energy in the shunts may be received by the cryogen in the conduits 440. In this way, thermal energy is efficiently removed from the motor coils 4000 using cryogen paths in the conduits 440.

The cryogen source may be a source of liquid helium or liquid hydrogen or the like. The cryogen may be provided as a liquid or a gas to the conduits for use in thermal energy removal.

The cryogen source may comprise a cryogen distributor 450. The arrangement 400 of Figure 4 has two cryogen distributors 450a, 450b. In an example, the arrangement 400 may have a cryogen distributor for each set of conduits. The cryogen distributor 450 may be a cryogen manifold distributor. The distributor 450 may comprise a corresponding number of outlets in fluid communication the plurality of conduits. In this way, the distributor 450 may be able to provide fluid flow from a singular cryogen source flow into a plurality of flow paths for the plurality of conduits.

In an example, the arrangement 400 may have four cryogen distributors 450a, 450b. In the example of Figure 4, there are distributors 450 shown in the two rear corners of the arrangement. In another example, there may be a further two distributors in the two near corners of the arrangement. For clarity, distributors 450 may be positioned in any arrangement though connected to the conduits 440 at both ends and on both sides of the motor coil 4000. The use of at least one distributor 450 is advantageous for distributing cryogen from the cryogen source to the conduits 440. Further distributors are further useful for ease of construction of the arrangement and for cryogen flow path management.

In an example, the arrangement 400 may have a portion that is electrically insulating. In the arrangement 400 of Figure 4, there is an electrically insulating portion 452. The portion 452 may abut at least one of the elements in the arrangement to further provide resistance to formation of eddy currents within the arrangement. In an example the electrically insulating portion may abut the plurality of conduits 440, the first plurality of elongate thermally conductive members 410 and the second plurality of elongate thermally conductive members 430. The arrangement 400 may have an electrically insulating portion 452 for each distributor 450a, 450b. Additionally or alternatively, an electrically insulating portion may be inserted into each of the conduit pipes 440 (an example of this is discussed below).

Use of the electrically insulating portion provides a preventative measure against an electrically conductive closed loop within the arrangement 400. Such closed loops are undesirable due to formation of eddy currents. The electrically insulating portion may be formed of any material. In a specific example, the electrically insulating portion is formed from ceramic. Each conduit may have a portion that is electrically insulating to further prevent against formation of eddy currents. There may be a compression arrangement around the outside of the ceramic portion for handling differences in thermal expansion and contraction during temperature changes within the thermal energy transfer device 400.

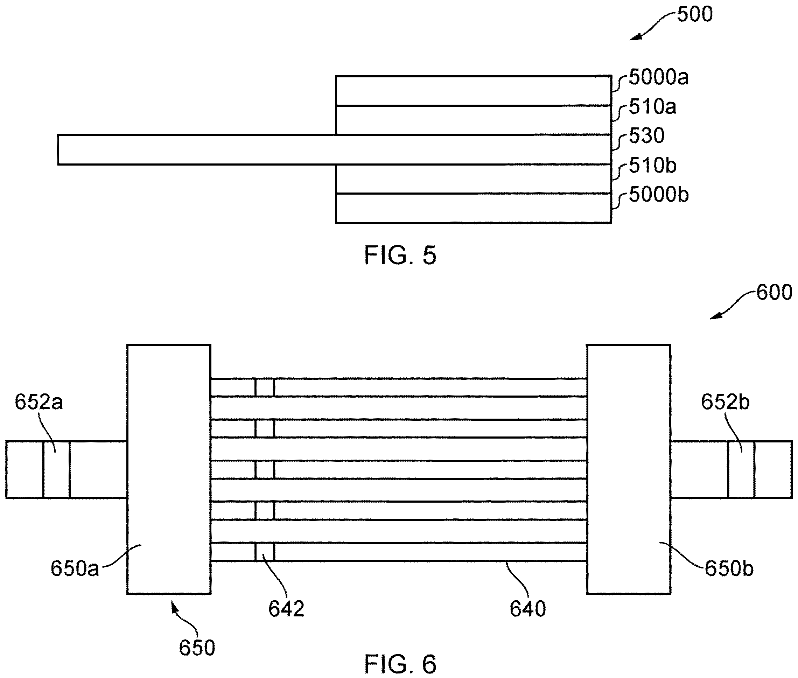

Referring now to Figure 5, there is shown an example of a thermal energy transfer device 500 according to an example. The example is similar to the examples of Figures 3a and 3b. While the examples of Figures 3a and 3b could be described as being in an "alternating" arrangement, the example shown in Figure 5 is in a different arrangement.

The device 500 has motor coil portions 5000a, 5000b. The motor coil portion 5000a is in direct contact with one of the first plurality of elongate thermally conductive members, specifically elongate thermally conductive member 510a. The member 510a may be referred to as a longitudinal heat shunt 510a. The elongate thermally conductive member 510a is in direct contact with one of the second plurality of elongate thermally conductive members 530. The member 530 may be referred to as a transverse heat shunt 530. The member 530 is in direct contact with a second of the first plurality of elongate thermally conductive members, specifically elongate thermally conductive member 510b. The member 510b is in contact with a further motor coil portion 5000b.

In the example shown in Figure 5, the motor coils 5000 contact longitudinal heat shunts 510 on both sides of the coils 5000. The transverse heat shunt 530 also contacts longitudinal heat shunts 510 on both sides of the shunt 530. As such, the arrangement of Figure 5 differs to that in Figures 3a and 3b by the arrangement of the elements within the device. Both arrangements provide advantageous highly efficient thermal energy removal as intended. The arrangements shown herein are not deemed as limiting examples, rather as explanatory iterations of the device.

Referring now to Figure 6, there is shown an example of a thermal energy transfer device 600. The thermal energy transfer device 600 of Figure 6 is an example side on view of a portion of the thermal energy transfer device 400 of Figure 4. The example of Figure 6 does not show the motor coils, the longitudinal heat shunts or the transverse heat shunts. The example of Figure 6 illustrates an example of an arrangement for the conduits and the cryogen distributors (also referred to as manifolds).

The arrangement 600 of Figure 6 shows two distributors 650a, 650b and a series of conduits 640 extending from one distributor 650a to the other distributor 650b. In Figure 4, the equivalent distributor, to distributor 650b in Figure 6, is not shown but has been discussed above as being optional for inclusion in the arrangement of Figure 4.

The distributor (or manifold) 650a receives a flow of cryogen from the cryogen source (not shown). The distributor separates this flow into a series of flows for each conduit 640. In the example of Figure 6 there are 5 conduits. The cryogen flows through each of these and conducts indirect thermal energy removal from the motor coils. "Indirect" is used here as the thermal energy is removed from the motor coils by the longitudinal and/or transverse heat shunts and then removed from these by the conduits and cryogen. As such, the cryogen indirectly removes the heat from the motor coils. The cryogen in the conduits then reach the second distributor (a "downstream" distributor, in comparison to the "upstream" distributor 650a) where the flow may be recombined in a fewer number of cryogen flows. In an example, this is one cryogen flow path.

The conduits 640 have an electrically insulating portion 642. The electrically insulating portion 642 is arranged to hinder eddy current production in the conduits by hindering the formation of closed metal loops, in which eddy currents may be produced. The electrically insulating portion 642 may be formed of ceramic or any similar electrical insulating material. The distributors 650a, 650b also have electrically insulating portions 652a, 652b to prevent the formation of closed metal loops.

The arrangement of Figure 6 is highly advantageous from an electrical and thermal standpoint. By preventing the occurrence of eddy currents with the more complex arrangement, the thermal energy removal properties of the arrangement are improved vastly over modern systems.

In an example, therefore, an arrangement according to the present invention has a plurality of electrically insulating portions arranged to electrically insulate the plurality of conduits from each other within the plurality of conduit 640. This way it is meant that any one conduit 640 is electrically insulated from any other conduit 640. This uses a large amount of insulating portions so as to very effectively reduce the occurrence of eddy currents, and the associated undesirable indirect heating. This occurs by reducing the likelihood of a closed metal loop along which eddy currents may form.

In an example, the plurality of conduits are electrically isolated from one another. This may be achieved by arrangement of electrically insulating elements between conduits. By electrically insulating conduits from one another, there can be prevention (full or partial) of a metallic closed loop. Disrupting or preventing formation of a closed metallic loop in turn prevents the formation of eddy currents. Eddy currents are undesirable as they lead to increased thermal energy generation when passing through materials, due to inherent electrical resistance in those materials. Production of eddy currents is therefore counterproductive to the removal of thermal energy from motor coil and the area around the motor coil.

In an example, the cryogen source is a user-controllable cryogen source arranged to controllably provide cryogen to the plurality of conduits. In this way, in moments of high demand for cooling (such as during high demands of thrust), more cooling can be performed by the thermal energy transfer device. For example, during take off of an aircraft there is a very high demand on thrust. In this way, the motor will operate at a high capacity and therefore produce more heat. It is desirable for this heat to be removed by the thermal energy transfer device. The thermal energy transfer device can perform greater thermal removal when cryogen is provided to the arrangement through the conduits.

In an example, the motor coil is formed from a series of turns (or layers with one or more turns each). The longitudinal and transverse heat shunts are incorporated during winding of the turns. This arrangement may then be impregnated with epoxy resin to ensure high structural, electrical and thermal integrity. The conduits may be introduced into contact with the transverse heat shunts subsequently. By longitudinal and transverse heat shunts, it is understood the first plurality and second plurality of elongate thermal members.

Therefore, providing cryogen to the conduits selectively, improves the overall efficiency of the device. While the cryogen could be continuously provided to the conduits, this may be wasteful in moments where high thermal removal is not required. As such, controllable and/or selective provision of cryogen to the conduits for handling high load instances (such as take off, or rapid acceleration of a vehicle or the like) is highly advantageous.

The cryogen source and the plurality of conduits may be arranged in a closed loop. It is more economic for the cryogen to be re-used where feasible. While certain arrangements may jettison heated cryogen, this is wasteful and lowers the environmentally friendly aspect of the present arrangement. In a preferred example, the cryogen is re-used and is contained within a closed loop which may contain a condenser or a heat exchanger or the like to remove the thermal energy collected from the motor coil by the cryogen during passage through the thermal energy transfer device.

As mentioned above, closed metallic loops are undesirable. Therefore, in the formation of the closed cryogen loop it is preferable to avoid also providing a closed metallic loop. Inclusion and positioning of an electrically insulating portion (or portions) may be highly advantageous to allow re-use of the cryogen while also preventing the formation of eddy currents in the arrangement.

In an example, the first plurality of elongate thermally conductive members have a first average length, and wherein the second plurality of elongate thermally conductive members have a second average length, wherein the first average length is greater than the second average length. Average is used here to account for the tolerances in the formation of the thermally conductive members, there may be differences in the lengths of individual thermally conductive members, however in the main the average length of the first plurality of elongate thermally conductive members may be greater than the average length of the second plurality of elongate thermally conductive members.

In an example, the longitudinal heat shunts 410 have a longer length than the transverse heat shunts 430. This can be seen in the example of Figure 4. There is no requirement for this to be followed. This may be preferable however as the transverse heat shunts 430 are shorter to force conduction and convection to provide highly effective cooling particularly once the cryogen is flowing through the conduits 440. By providing a short distance between the coils and the cryogen, highly effective thermal transfer occurs from the motor coils 4000. In an example wherein the conduits 440 are arranged to abut the longitudinal heat shunts 410, it may be preferable for the longitudinal heat shunts 410 to have a shorter length (on average) than the transverse heat shunts 430.

The arrangement herein provides highly effective thermal energy removal from high thermal energy motor coils to provide improved electrical efficiencies. This is at least in part provided by the use of litz wires as heat shunts that project in different directions. This is discussed above as being in transverse and longitudinal axes. In an example, a highly effective arrangement has the heat shunts at around 90 degrees difference in their long axes.

The thermally conductive members are advantageously formed of the same material as the coil of the motor so that thermal expansion and contraction is the same across the interfaces between the materials. In this way, the arrangement operates effectively in all temperature ranges. Matching materials is therefore highly useful for coping with thermal expansion and may be used throughout the arrangement, where feasible.

In an example, the cryogen used in the present arrangement may be inert for increased safety. For example, the cryogen may be helium. In contrast, cryogenic hydrogen has an increased capacity for thermal removal and therefore may be preferential. In an example, release of the cryogen from the source may be controlled by a controller. The arrangement may include a heat sensor arranged within the motor to provide feedback to the controller based on the current motor coil temperature. This temperature is related to work demand placed on the motor. A separate sensor may be able to detect the work demand placed on the motor. The controller is able to receive signals from these sensors and control release of the cryogen at a suitable rate for passing through the conduits for providing a suitable level of cooling to the motor. The cryogen may be provided under a pumped condition via use of a pump or the like.

In examples, the arrangement may have a plurality of insulating portions arranged throughout to prevent closed metal loops. These may be in the conduit linking to the distributor or from the distributor to the cryogen source. Each of these electrically insulating portions reduces the likelihood of the closed metal loop, which may lead to eddy currents. The cryogen source may be a store of cryogen or producer of cryogen or the like. The cryogen source acts in such a way to provide cryogen to the system in a controlled manner for cooling.

The heat shunts disclosed herein may be interweaved and/or arranged parallel. The arrangement of the litz wires may vary and provide the advantages as described herein. Interweaving of the elongate thermally conductive members may be particularly advantageous because this approach can improve the overall thermal conductivity in more than one direction simultaneously.

The term "cryogen" is used to refer to the actual substance that is of a cryogenic temperature. Such a substance would in most arrangements be contained within a tank or container or the like. A cryogenic temperature clearly depends on the substance in question however cryogenic behaviour has been observed in substances up to -50°C. Therefore, cryogenic temperature is taken herein to refer to temperatures below -50°C. The cryogen may be any of hydrogen, helium, nitrogen or the like, in liquid, gas or supercritical phase. The cryogen may be helium that is cooled to a very low temperature without being liquefied. Such a cryogen is particularly suitable for use in an aircraft. In an example, the cryogen may be frozen nitrogen or cryogenically frozen water.

In an example, at least a portion of the first and/or second plurality of thermally conductive members is arranged into a cable for example by winding. The winding may be a spiral or helical winding. Such an arrangement allows individual strands in the cable to transition from being centrally arranged in the cable to being outwardly arranged in the cable. In this way, each strand can contribute more effectively to the overall cooling of the motor coil.

In an example, the device is arranged in use so that each of the first and/or second plurality of thermally conductive members experiences an extremely low power of heating due to eddy currents. In comparison cables in modern state of the art systems produce about 10 Watts of excess power that is converted into heating, in the presently disclosed arrangement cables produce about 0.1 Watts of excess power. This is therefore a clear significant improvement.

Modern arrangements that have been found to provide around 10 Watts include an arrangement utilising slotted aluminium in place of the plurality of thermally conductive members or the like.

The present arrangement therefore, provides a system that can reduce undesirable heating by a factor of around 100. This improves the overall performance of the device in particular in handling the removal of thermal energy and not producing undesirable additional heating for conducting away from the device.

In an example, the plurality of thermally conductive members may be bonded to the coil surfaces of the motor coil. This bonding ensures strong physical connection between the elements and therefore improves thermal conductivity between the two elements. This bonding may be epoxy impregnated or the like.

In an example, each of the first and/or second plurality of thermally conductive members has an outer layer of electrically insulating material. Such a layer provides a barrier against generation of additional undesirable eddy currents. In a specific example, each of the plurality of thermally conductive members has an outer layer of epoxy resin. The epoxy resin is an example of an electrically insulating material that is easy to produce and provides the electrical insulation desired.

In an example, there is a layer of insulating material is arranged between a portion of any adjacent pair of thermally conductive members so as to prevent a current passing from one thermally conductive member into an adjacent thermally conductive member. The insulating material may be along the full length of the thermally conductive member to ensure that no current can pass between adjacent thermally conductive members. In an example where one layer of electrically insulating material is used in a layered arrangement between thermally conductive members, less material is used than in an example where each thermally conductive member has a layer of electrically insulating material. Such an arrangement may therefore be cheaper to produce.

While examples are disclosed herein regarding arrangements wherein the plurality of thermal conductors are adjacent a portion of the inner and/or outer surfaces of the electrical coil winding, this should not be limiting. It is advantageous for the conductors to be adjacent and secure to the electrical coil winding. This may be via the inner or outer surfaces or the conductors (or some conductors) may be arranged to connect into the body of the coil. Such a connection is also envisaged as within the scope of this invention. Such an arrangement fundamentally operates in the same manner to achieve the same goal; operating via the removal of thermal energy from the coil by connection to at least some of the plurality of thermal conductors.

The device herein may be arranged in use as part of an electric motor. The motor may be for use in an aircraft or the like. The motor has an electrical coil winding and a cooling arrangement as described herein.

The motor may be held at low temperatures using, e.g., cryogens. The cryogen present for use with fuel cells or the like in the electrical motor may be used for cooling the thermally conductive portion in the arrangement herein. This advantageously utilises an already present feature for a secondary aspect in the device of the present invention.

Although the invention described herein relates to thermal energy transfer for an electric motor in particular in the example of such a motor in an aircraft, it may also be applied to application where propulsion generation involves generating undesirable heat that is to be transferred away from the point of generation.

These applications may include automotive, space, domestic or commercial propulsion generation and so forth.

The system herein is simple to manufacture, robust against physical change such as during temperature conduction, and highly effective. The system herein is an improvement over present state of the art systems.

The thermally conductive members may be manufactured via additive manufacturing to provide particularly narrow conductive elements interlaced with insulating portions.

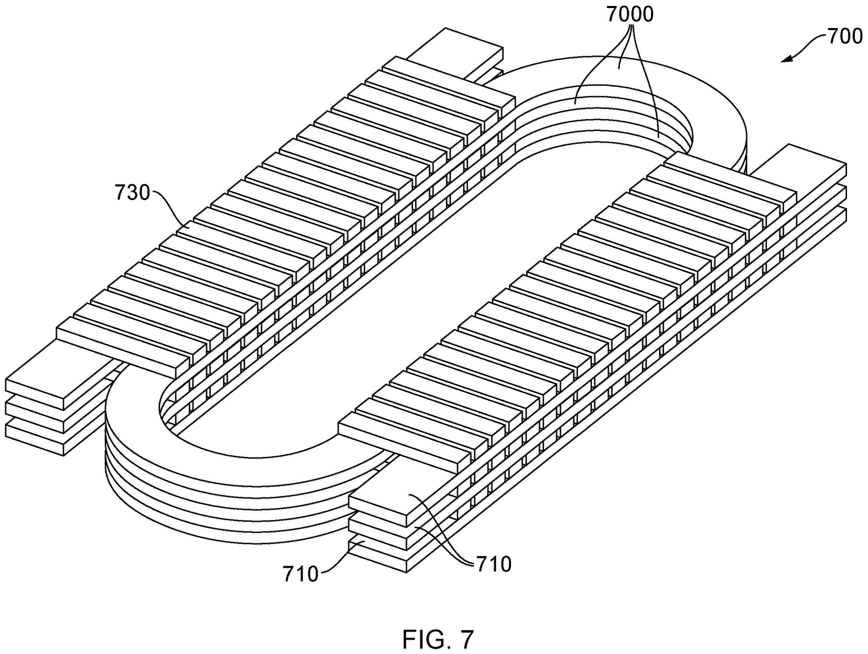

Referring now to Figure 7, there is shown an example of a thermal energy transfer device 700. The thermal energy transfer device 700 has a plurality of elongate thermally conductive members 730 and at least one thermally conductive portion 710. In the example shown, there are a plurality of thermally conductive portions 710 arranged interleaved between rows of the plurality of elongate thermally conductive members 730. This need not be the case and is only an example arrangement.

The coils of the motor 7000 are shown and in use generate heat. In the arrangement, this heat is transferred from the coil by the plurality of elongate thermally conductive members 730 and carried to the thermally conductive portions 710.

The arrangement of Figure 7 may be seen as an improvement over the earlier arrangements as the manufacturing of this arrangement is more straightforward. The construction of the thermally conductive portions 710 is more straightforward as the portions 710 may be in a block form and do not need to be refined into individually electrically isolated strands. The thermally conductive portions 710 have a thermal conductivity of at least 100 Wm⁻¹K⁻¹ and an electrical conductivity of approximately less than 10⁻¹⁴ Sm⁻¹. The thermally conductive portions 710 may be in the form of strands or the like but do not require this. It may be more straight forward to form the thermally conductive portions 710 as blocks.

This material selection allows a reduction in the manufacturing difficulty of the arrangement. The material of the thermally conductive portions 710 may be non-metallic. In such an arrangement, it is therefore advantageous to have the plurality of elongate thermally conductive members 730 as at least partially metallic to allow for strong connection to the coils. The metallic members 730 also therefore undergo similar thermal contraction and expansion as the coil and therefore a strong connection between the members and the coil is more likely. In contrast, the thermally conductive portions 710 are, in the main, not metallic. As such, direct connection between the thermally conductive portions 710 and the coil of the motor can be difficult particularly in light of differences in thermal expansion/contraction.

The thermally conductive portions 710 may have metalised ends to allow soldering of the end portions. This may be advantageous in providing a direct connection between the thermally conductive portions 710 and the coils (if desired) or other metal elements.

The members 730 may abut portions of the coil 7000. The members 730 can be seen to project away from the coil 7000. In this way, the thermal energy can be, over a short distance, transferred to the portions 710 for conducting away from the coil 7000.

As noted above, the members 730 may be formed from high purity aluminium or the like. The members 730 may be maintained at low temperatures as being cooled by cryogen from a cryogen source (not shown in Figure 7) or the like. Each of the plurality of elongate thermally conductive members may have a thermal conductivity of at least 1500 Wm⁻¹K⁻¹ and an electrical conductivity of at least 3 × 10⁹ Sm⁻¹ at a temperature of around 30 K.

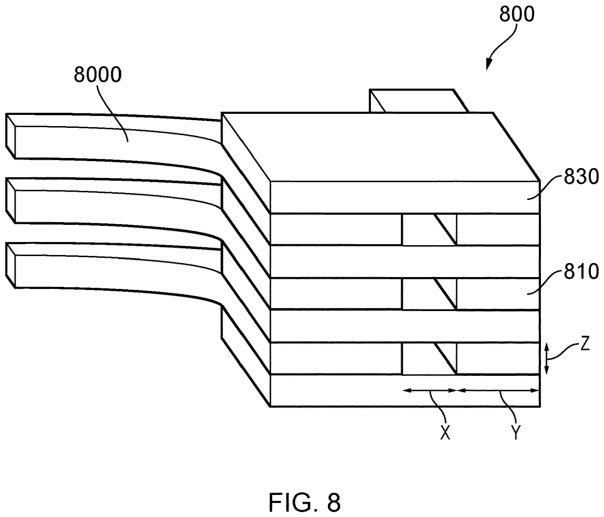

Referring now to Figure 8, there is shown a portion of an example of a thermal energy transfer device 800. The Figure shows coil 8000, a series of conductive members 830 abutting the coil 8000 and a plurality of thermally conductive portions 810 abutting the conductive members 830. In the example of figure 8 there is an interleaved arrangement of the members 830 and the portions 810.

The distance from the coil 8000 to the portions 810 is not far, which is advantageous for a compact solution. The double ended arrow X shows a distance between the coil 8000 and the portions 810. In an example, this may be around 5 mm. The double ended arrow Y shows a width of the portions 810 and this may be around 7.5 mm. The double ended arrow Z shows a depth of the portions 810 and this may be around 3 mm. The length of the portions 810 (not shown) may be around 110 mm.

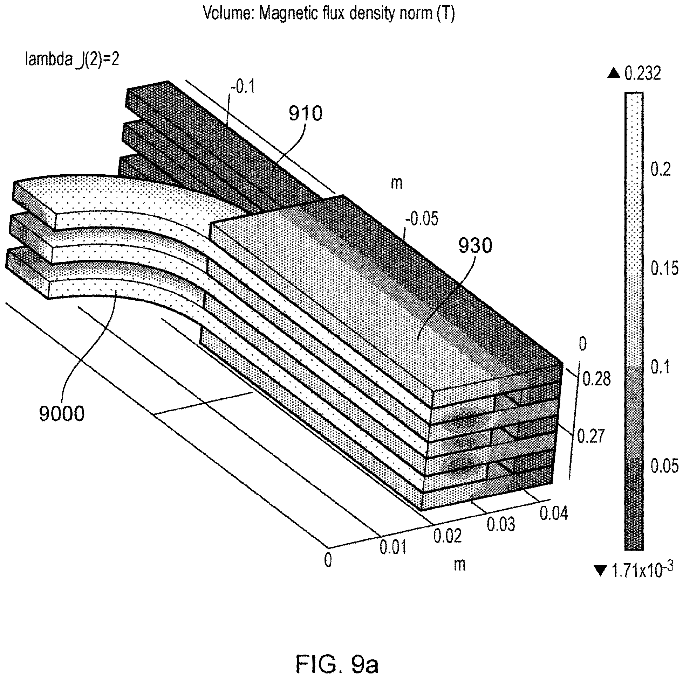

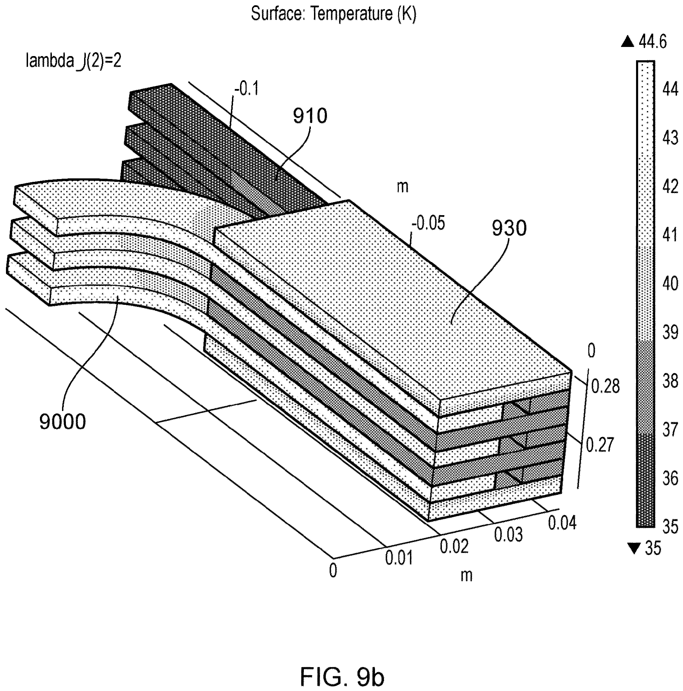

Referring now to Figures 9a and 9b, there are shown examples of arrangements of thermal energy transfer devices. Figures 9a and 9b show in use views of the arrangements.

Figure 9a shows a view with magnetic flux density shown in differing colours as per the gradient on the right of Figure 9a. As can be seen, the lowest magnetic flux density is provided by the members 910 having been selected from very low electrically conductive materials. The members 910 have almost no contribution to eddy currents and therefore provide an excellent thermal energy removal solution for the present systems.

Figure 9b shows a view with surface temperature shown in differing colours as per the gradient on the right of Figure 9b. As can be seen, the lowest temperature is provided by the members 910 having been selected from very thermally conductive materials. The members 910 have a temperature almost 10 Kelvin lower than the coil. In this way, highly effective thermal energy removal can be provided by the present arrangement without producing undesirable eddy currents. This system also requires less manufacturing manipulation to provide several sets of the Litz wires and connect these to the coil or each other.

As per above examples, the members 910 may connect to a heat sink at the end of the members 910. This This heat sink may be a block or the like as per earlier figures. The temperature of the heat sink may be around 35 K or lower.

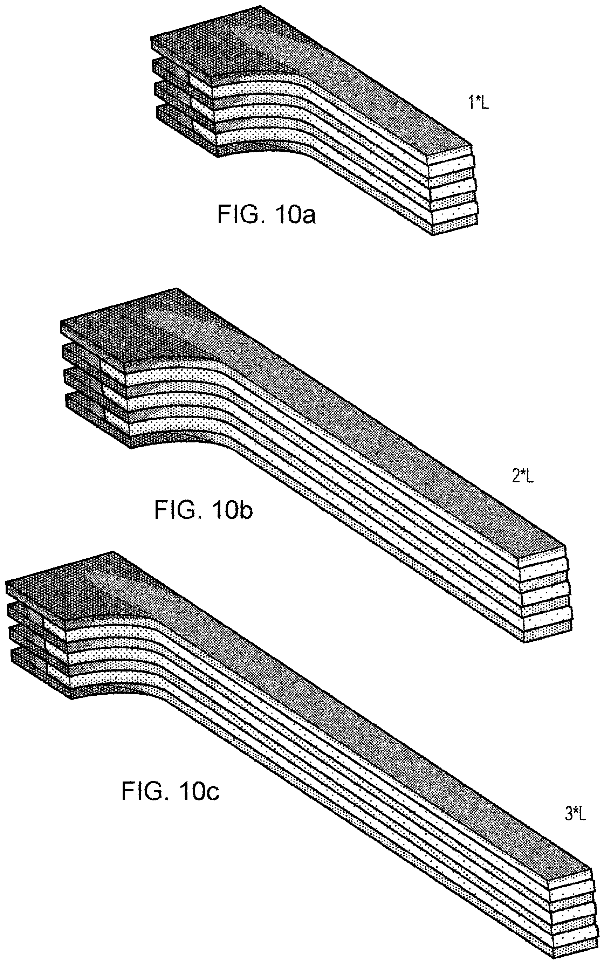

Figures 10a-10f provide different arrangements of length of coils with different cooling arrangements. The arrangements are shown at 35 K. The colour gradient is that as per Figure 9b, where lighter colour indicates higher temperature.

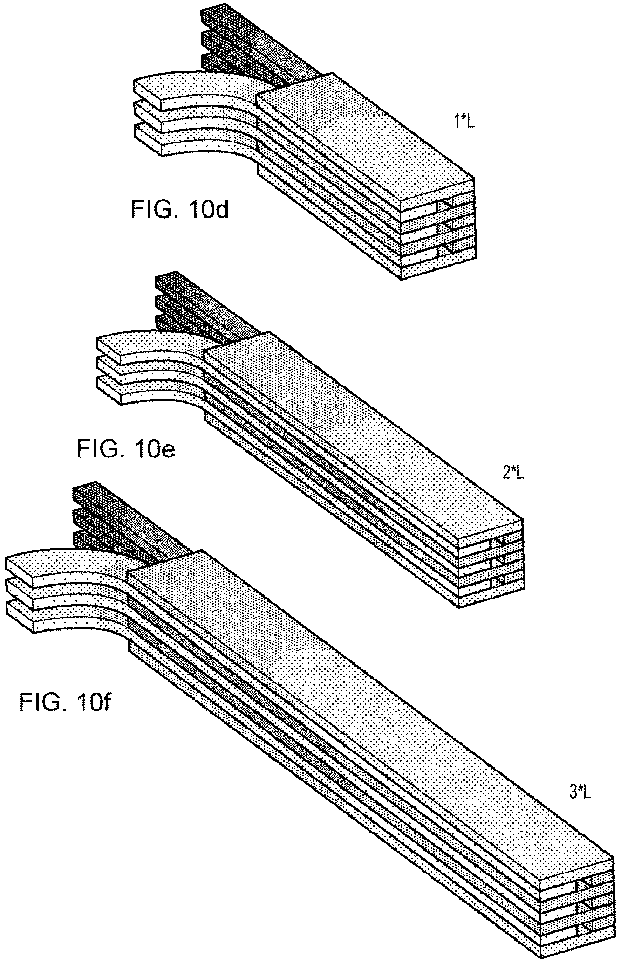

Figures 10a-10c illustrate an arrangement using a litz-wire shunt cooling approach, while Figures 10d-10f illustrate an arrangement using thermal blocks of sapphire or the like. The variation between the Figures relates to the length of the motor. Figures 10a and 10d show a first length, Figures 10b and 10e show a length that is twice that of Figures 10a and 10d while Figures 10c and 10f show a length that is three times that of Figures 10a and 10d.

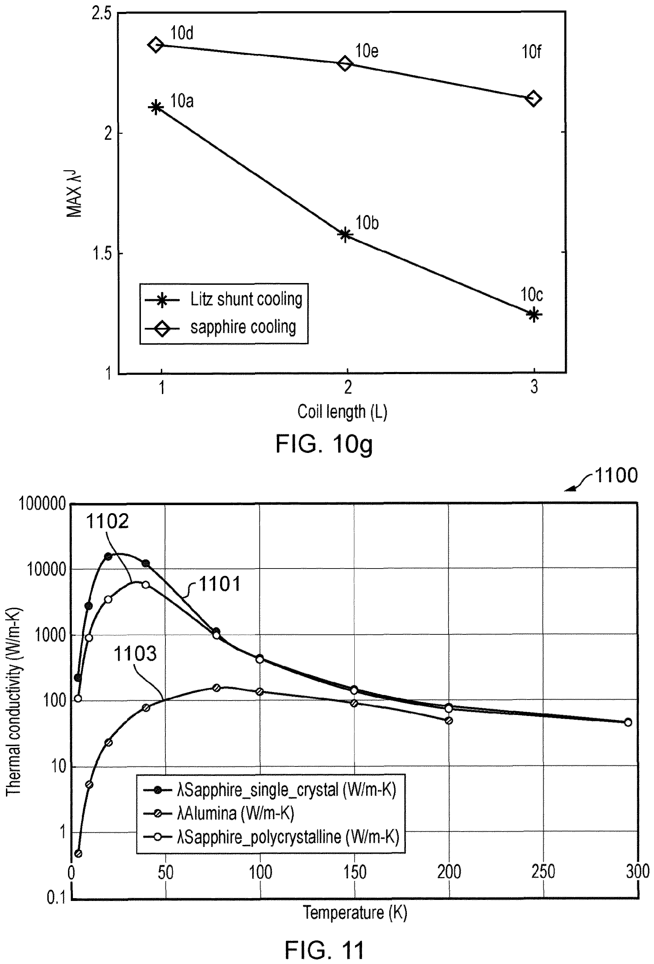

These figures showcase the cooling characteristics for each of the arrangements according to Figures 10a-10c and Figures 10d-10f, wherein a maximum current density is subjected to the coils before instability occurs in each arrangement. Figure 10g illustrates these maximum current densities for each of the arrangements according to Figures 10a-10f, wherein the numerals 10a-10f correspond with each of the arrangements in Figures 10a-10f. Figure 10g provides the nominal length of a motor coil, L, on the x-axis and the maximum current density on the y-axis, wherein the maximum current density is set to the nominal maximum current density, λ, that the motor is designed to operate at. Note that the nominal maximum current density λ is set at 1 for simplicity. As such, Figure 10g shows the maximum current density each of the arrangements according to Figures 10a-10f can achieve before instability and breakdown of current density occurs due to thermal runaway.

It can be seen that, compared to using the litz-wire heat shunt arrangement (Figs 10a-10c), there is a benefit in the use of the present arrangement (Figs 10d-10f). In particular, while at the first length there is only a minor drop (in Fig 10a compared to Fig 10d), when the length of the coil is increased, the maximum current drops for both, however it drops at a faster rate in the litz-wire heat shunt arrangement compared to present arrangement using e.g. sapphire.

Therefore, the present arrangement is an improvement in terms of thermal energy transfer as well as suitability of solution over a range of motor sizes.

As can be seen, the present arrangement (Figs 10d-10f) provide better scaling for longer coils. As such, the present arrangement may be preferred over previous solutions where coils in motors have a greater length.

Referring now to Figure 11, there is shown a graph 1100 of materials suitable for use as the members for the present arrangement. In particular, materials such as sapphire, diamond, aluminium nitride, and beryllium oxide have been shown to be highly effective in providing high thermal conductivity with very low electrical conductivity.

The graph 1100 shows a relationship of temperature against thermal conductivity for monocrystalline sapphire 1101, polycrystalline sapphire 1102 and alumina 1103. As can be clearly seen, the thermal conductivity of each is suitable below around 50 K or so. While the monocrystalline sapphire offers the greatest response, the polycrystalline structure is also completely reasonable for use in present arrangements. Use of electrical insulators greatly increases the ease of manufacturing as there is no need to produce individually insulated threads of conductor (e.g. Litz wires).

Suitable here may mean suitable for rapid thermal conductivity from the coil. In particular, monocrystalline sapphire has a thermal conductivity of over 10⁴ Wm⁻¹K⁻¹ below 50 K. Such cooling is feasible with cooling from cryogens and the like as discussed above.

Polycrystalline sapphire has been found to be stronger and therefore more reliable under stress. Use of polycrystalline may increase the lifetime of the system. Polycrystalline is also cheaper and therefore use improves the overall device from a manufacturing cost perspective.

Other options include beryllium oxide which may be grown in a crystalline form to occupy a shape desirable for use in the system. As noted above, there is not requirement for these materials to be formed in strands and therefore blocks will suffice.

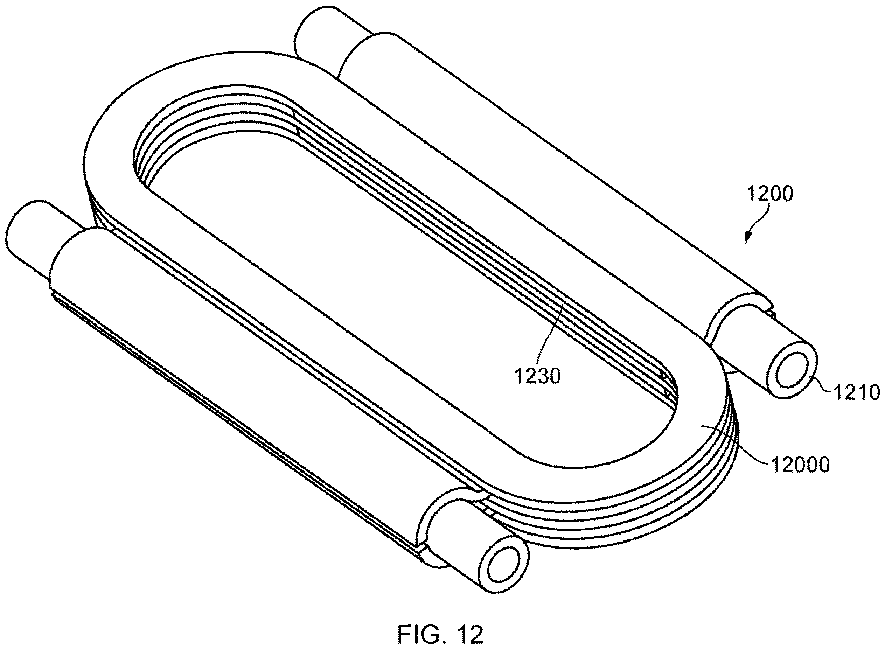

Arrangements disclosed above have conduits (see Figs 3b and 4). Figure 12 shows an example of an arrangement of a thermal energy transfer device 1200 with conduits. The device 1200 has a coil 12000, portions with conduits 1210 and members 1230. The arrangement is similar to that of Figure 7. In this arrangement, the members 1230 project away from the coil 12000 and wrap around a conduit 1210 which may be formed of any suitable materials as discussed above. Through the conduit 1210 may run a fluid such as a cryogen from a cryogen source or the like. This further development may improve the thermal energy removal of the system.

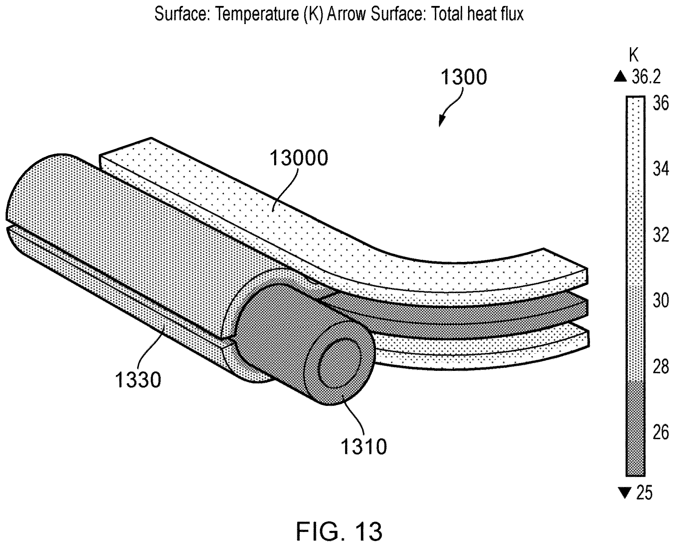

Referring now to Figure 13, there is shown an example of a portion of a device 1300. The Figure 13 shows a coil 13000 with members 1330 and a portion 1310 in the form of a conduit. The temperature of the coil 13000 can be seen to be around 36 K while the conduit 1310 may be around 25 K or so. The conduit 1310 may be in contact with a cryogen source and cryogen may flow through the conduit to (indirectly) cool the coil 13000 via thermal energy transfer.

As such, disclosed herein is a proposed device wherein non-typical materials are manipulated for their properties and use in a thermal and electrical environment. Typical devices do not use these materials however the inventors have designed a system that overcomes the inherent drawbacks of these materials to enable a highly effective overall function.

The device herein has excellent thermal energy transfer and provides little to no eddy currents. Therefore the overall efficiency of the cooling system for use in an electrically operated aircraft (electrically operated in terms of at least some propulsion is offered via electrical energy generation) is significantly improved over previous arrangements.

## Claims

1. A thermal energy transfer device for use in transferring thermal energy from a coil of an electrically drivable motor, the device comprising:
a plurality of elongate thermally conductive members each arranged to thermally communicate with at least a portion of a coil of an electrically drivable motor;
at least one thermally conductive portion arranged to thermally communicate with a plurality of elongate thermally conductive members,
wherein each of the plurality of elongate thermally conductive members is electrically insulated from any other of the plurality of thermally conductive members, and
wherein the first plurality of elongate thermally conductive members are arranged to have a longitudinal axis in a first axis, and
wherein the at least one thermally conductive portion is arranged to have a longitudinal axis in a second axis,
wherein the first axis and the second axis are arranged between 45 degrees and 135 degrees apart,
and wherein the at least one thermally conductive portion has a thermal conductivity of at least 100 Wm⁻¹K⁻¹ and an electrical conductivity of less than 10⁻¹⁴ Sm⁻¹.

2. The thermal energy transfer device of claim 1, wherein the plurality of elongate thermally conductive members are arranged to abut to at least a portion of a coil of an electrically drivable motor and project away from the at least a portion of a coil.

3. The thermal energy transfer device of claim 1 or 2, wherein each of the plurality of elongate thermally conductive members has a thermal conductivity of at least 1500 Wm⁻¹K⁻¹ and an electrical conductivity of at least 3 × 10⁹ Sm⁻¹ at a temperature of around 30 K.

4. The thermal energy transfer device of any preceding claim, further comprising a cryogen source containing a cryogen for use in electrical energy generation, wherein the at least one thermally conductive portion and the plurality of elongate thermally conductive members are in thermal communication with the cryogen.

5. The thermal energy transfer device of claim 4, wherein, in use, the at least one thermally conductive portion is maintained at a temperature of below around 50 K, and the plurality of elongate thermally conductive members are maintained at a temperature of below around 50 K.

6. The thermal energy transfer device of claim 4 or 5, wherein at least one of the at least one thermally conductive portion comprises a conduit for carrying a fluid, each conduit arranged to abut at least a portion of at least one of the plurality of elongate thermally conductive members.

7. The thermal energy transfer device of claim 6, wherein each conduit is in fluid communication with the cryogen in the cryogen source.

8. The thermal energy transfer device of claim 7, wherein in use a fluid cryogen from the cryogen source is arranged to be provided to each conduit and is arranged to flow through each conduit.

9. The thermal energy transfer device of any preceding claim, wherein the at least one thermally conductive portion is formed from at least one of: single crystal sapphire; polycrystalline sapphire; amorphous sapphire; diamond; aluminium nitride; and, beryllium oxide.

10. The thermal energy transfer device of any preceding claim, wherein the at least one thermally conductive portion is in the form of a block or a plurality of strands.

11. The thermal energy transfer device of any preceding claim, wherein the plurality of elongate thermally conductive members are formed from the same material as a coil of an electrically drivable motor.

12. The thermal energy transfer device of any preceding claim, wherein the first axis and the second axis are at least one of:
arranged between 70 degrees and 110 degrees apart; and,
substantially orthogonal.

13. The thermal energy transfer device of any preceding claim, wherein the first axis is a transverse axis and the second axis is a longitudinal axis.

14. The thermal energy transfer device of any preceding claim, wherein the at least one thermally conductive portion is electrically non-conductive.

15. A propulsion system for an aircraft comprising:
a cryogen source containing a cryogen for use in electrical energy generation;
at least one fuel cell for generating electrical energy at least in part from the cryogen;
a motor for providing propulsion at least in part from the electrical energy, the motor comprising at least one coil;
a thermal energy transfer device for transferring thermal energy from the at least one coil, the thermal transfer device comprising:
a plurality of elongate thermally conductive members each arranged to thermally communicate with at least a portion of the coil;
at least one thermally conductive portion arranged to thermally communicate with a plurality of elongate thermally conductive members,
wherein each of the plurality of elongate thermally conductive members is electrically insulated from any other of the plurality of thermally conductive members, and
wherein the first plurality of elongate thermally conductive members are arranged to have a longitudinal axis in a first axis, and
wherein the at least one thermally conductive portion is arranged to have a longitudinal axis in a second axis,
wherein the first axis and the second axis are arranged between 45 degrees and 135 degrees apart,
and wherein the at least one thermally conductive portion has a thermal conductivity of at least 100 Wm⁻¹K⁻¹ and an electrical conductivity of less than 10⁻¹⁴ Sm⁻¹.

16. The propulsion system of claim 15, wherein the plurality of elongate thermally conductive members are arranged to abut to at least a portion of the coil and project away from the at least a portion of a coil.

17. The propulsion system of claim 15 or 16, wherein each of the plurality of elongate thermally conductive members has a thermal conductivity of at least 1500 Wm⁻¹K⁻¹ and an electrical conductivity of at least 3 × 10⁹ Sm⁻¹ at a temperature of around 30 K.

18. The propulsion system of any of claims 15-17, wherein the at least one thermally conductive portion and the plurality of elongate thermally conductive members are in thermal communication with the cryogen,
the cryogen arranged to provide a heat exchanger function to the at least one thermally conductive portion and the plurality of elongate thermally conductive members.

19. The propulsion system of any of claims 15-18, wherein at least one of the at least one thermally conductive portion comprises a conduit for carrying a fluid, each conduit arranged to abut at least a portion of at least one of the plurality of elongate thermally conductive members,
wherein each conduit is in fluid communication with the cryogen in the cryogen source, and
wherein in use a fluid cryogen from the cryogen source is arranged to be provided to each conduit and is arranged to flow through each conduit.

20. The propulsion system of any of claims 15-19, wherein the at least one thermally conductive portion is formed from at least one of: single crystal sapphire; polycrystalline sapphire; amorphous sapphire; diamond; aluminium nitride; and, beryllium oxide.

21. A method of transferring thermal energy from a coil of an electrically drivable motor, the device comprising:
operating an electrically drivable motor,
conducting thermal energy from a coil of the electrically drivable motor along a first plurality of elongate thermally conductive members having a longitudinal axis in a first axis,
conducting thermal energy from a coil of the electrically drivable motor along at least one thermally conductive portion having a longitudinal axis in a second axis,
wherein the first axis and the second axis are arranged between 45 degrees and 135 degrees apart,
and wherein the at least one thermally conductive portion has a thermal conductivity of at least 100 Wm⁻¹K⁻¹ and an electrical conductivity of less than 10⁻¹⁴ Sm⁻¹.

22. An aircraft comprising the thermal energy transfer device of any of claims 1 to 14 or the propulsion system of any of claims 15 to 20.

23. A method of operating a thermal energy transfer device of any of claims 1 to 14 or the propulsion system of any of claims 15 to 20.
